# EUROPÄISCHE PATENTSCHRIFT

(11) **EP 0 623 563 B1**
(45) Veröffentlichungstag und Bekanntmachung des Hinweises auf die Patenterteilung: **16.07.1997**
(21) Anmeldenummer: 94106856.1
(22) Anmeldetag: 02.05.1994
(51) Int. Cl.: C03B 37/012, C03B 23/045

(54) **Vorrichtung und Verfahren zum Erhitzen eines langgestreckten Glaskörpers**
Apparatus and method for heating a long glass body
Appareil et procédé pour le chauffage d'un corps long en verre

(30) Priorität: 04.05.1993 DE 4314638
(43) Veröffentlichungstag der Anmeldung: 09.11.1994
(73) Patentinhaber: KABEL RHEYDT Aktiengesellschaft, D-41179 Mönchengladbach (DE)
(72) Erfinder: Lysson, Hans-Jürgen, Dipl.-Ing., D-41352 Korschenbroich (DE); Lisse, Frank, Dr., D-50769 Köln (DE)
(74) Vertreter: Mende, Eberhard, Dipl.-Ing.

(56) Entgegenhaltungen:
- EP-A- 0 216 338
- EP-A- 0 519 479
- DE-A- 3 321 711
- GB-A- 564 140
- GB-A- 2 176 472
- US-A- 2 731 772

## Beschreibung

Die Erfindung geht aus von einer Vorrichtung zum Feuerpolieren eines langgestreckten Glaskörpers mit einem drehbaren ersten Spannfutter, in das ein erstes Ende des Glaskörpers einspannbar ist, einem verschiebbaren Brenner und einem dem ersten Spannfutter abgewandten drehbaren zweiten Spannfutter bzw. von einem Verfahren zum Feuerpolieren eines langgestreckten Glaskörpers, bei dem der Glaskörper an einem ersten Ende in ein drehbares erstes Spannfutter eingespannt und an seinem diesem ersten Ende abgewandten zweiten Ende geführt wird, der Glaskörper um seine Längsachse gedreht und mittels eines zumindest parallel zu der Längsachse des Glaskörpers verschiebbaren Brenners erhitzt wird.

Eine Vorrichtung und ein Verfahren zum Erhitzen eines langgestreckten Glaskörpers, bei denen ein langgestreckter rohrförmiger Glaskörper an seinen beiden Enden fest in drehbare Spannfutter eingespannt und mittels einer in Längsrichtung des Rohres verschiebbaren Heizquelle erhitzt wird, ist bereits in der DE 27 32 615 A1 beschrieben.

Für das Ziehen hochwertiger, mechanisch fester und reproduzierbare optische Eigenschaften aufweisender, zur Informationsübertragung dienender optischer Glasfasern aus langgestreckten Glaskörpern, den sogenannten Vorformen, ist es wichtig, daß die Vorformen eine sehr homogene und kontaminationsfreie Oberfläche aufweisen. Zu diesem Zweck ist es bekannt, unmittelbar vor dem Faserziehen eine Feuerpolitur der Vorform durchzuführen. Bei der Durchführung einer solchen Feuerpolitur und der Verwendung der aus der DE 27 32 615 A1 bekannten Vorrichtung wird zum beidseitigen Einspannen des Glaskörpers an das eine Ende des langgestreckten Glaskörpers zusätzlich ein Quarzstab angeschweißt und dieser Quarzstab in das entsprechende Spannfutter eingespannt, damit die mit hohem Kostenaufwand hergestellte Vorform möglichst über ihre gesamte Länge der Feuerpolitur unterzogen wird und so eine hohe Qualität der später aus der Vorform gezogenen Glasfaser gewährleistet ist. Nach Beendigung der Feuerpolitur muß dann der Quarzstab wieder abgeschmolzen werden. Um eine Kontamination der durch die Feuerpolitur erzeugten homogenen Oberfläche des als Vorform dienenden Glaskörpers bei dem Abschmelzen des hilfsweise angeschweißten Quarzstabes zu vermeiden, ist hierzu eine Unterstützung des langgestreckten Glaskörpers mittels sogenannter Richtroller erforderlich, die einen annähernd konstanten Abstand zwischen dem Glaskörper und dem Brenner gewährleisten, die aber ebenfalls eine Kontamination der Oberfläche des Glaskörpers bewirken können.

In der GB-A-2 176 472 ist ein Verfahren zur Herstellung einer Vorform für optische Glasfasern beschrieben. Ein Quarzglas-Mantelrohr mit einem darin angeordneten Körper aus Glasruß wird mit einer an das Mantelrohr angeschweißten Pfeife in eine erste Einspannvorrichtung eingespannt. Das Mantelrohr wird in Rotation versetzt und in einen auf 1900°C vorgeheizten Ofen gefahren. Von der anderen Ofenseite her wird ein in einer zweiten Einspannvorrichtung gehaltenes Abzugsrohr mit der gleichen Drehzahl und -richtung in den Ofen gefahren und mit einem an dem Mantelrohr angeschweißten Auspuffröhrchen durch Verschmelzen verbunden. Dann wird das Quarzglas-Mantelrohr mit dem Körper aus Glasruß langsam durch den Ofen gefahren und unter Aufschrumpfung zu einer Vorform ausgezogen.

Die DE-A-33 21 711 betrifft ein Verfahren zur Herstellung eines zylindrischen Glaskörpers, wie es bei der Herstellung von Vorformen für optische Glasfasern oder beim Ziehen von optischen Glasfasern aus entsprechenden Vorformen anwendbar ist. Dabei wird an ein Ende des Glaskörpers mindestens ein stab- und/oder rohrförmiges Ansatzstück vorzugsweise radial angeschmolzen, wodurch die Wärme- und/oder Strahlungsleitung von dem Glaskörper zu den Ansatzstücken erheblich vermindert wird.

Ausgehend von diesem Stand der Technik liegt der Erfindung das Problem zugrunde, bei der Feuerpolitur von langgestreckten Glaskörpern, die z. B. als Vorform zum Faserziehen verwendet werden, auf einfache Art und Weise eine Kontamination sowie eine mechanische Beschädigung der Oberfläche des Glaskörpers während oder nach der Feuerpolitur zu vermeiden.

Dieses Problem wird durch den Patentanspruch 1 gelöst, indem in das zweite Spannfutter ein Quarzrohr eingespannt ist und der Glaskörper an seinem dem ersten Ende abgewandten zweiten Ende in ein Quarzrohr einführbar und ohne eine Befestigung an dem Quarzrohr durch dieses geführt ist, bzw. durch den Patentanspruch 4, indem der Glaskörper an seinem zweiten Ende durch das Einführen des zweiten Endes in ein Quarzrohr und das Einspannen des Quarzrohres in ein dem ersten Spannfutter abgewandtes drehbares zweites Spannfutter ohne eine Befestigung des Glaskörpers an dem Quarzrohr geführt wird.

Die durch die Erfindung erzielbaren Vorteile bestehen insbesondere darin, daß die Kontamination der Oberfläche des langgestreckten Glaskörpers durch eine Berührung während oder nach der Feuerpolitur vermieden und eine hohe Oberflächenqualität erreicht wird. Zudem wird die Herstellung wesentlich vereinfacht, da keine Justierung eines Richtrollers, kein Umspannen des Glaskörpers während des Prozesses und kein Ausrichten, Anschweißen und abschließendes Abschmelzen eines hilfsweise verwendeten Quarzstabes erforderlich ist. Auf diese Weise lassen sich auf einfache Art durch das Ausziehen des als Vorform verwendeten langgestreckten Glaskörpers besonders hochwertige Glasfasern herstellen, wobei die Faserfestigkeit gesteigert, die Gefahr von Faserbrüchen reduziert und die optischen Eigenschaften der Glasfasern verbessert werden.

Durch die in den Unteransprüchen aufgeführten Merkmale sind vorteilhafte Weiterbildungen und Verbesserungen der Erfindung möglich.

Für ein einfaches Einführen des zweiten Endes des Glaskörpers in das Quarzrohr, einen festen Halt und eine einfache Zentrierung des langgestreckten Glaskörpers in dem Quarzrohr ist es vorteilhaft, wenn der Glaskörper mit einer an seinem zweiten Ende ausgebildeten Spitze in das Quarzrohr einführbar ist.

Um eine kontaminationsfreie Oberfläche des Glaskörpers dadurch zu gewährleisten, daß die Oberflächen des Glaskörpers und des Quarzrohres ähnliche thermische Eigenschaften aufweisen, ist es vorteilhaft, wenn das Quarzrohr aus dem gleichen Werkstoff wie der Glaskörper an seiner Oberfläche ausgebildet ist.

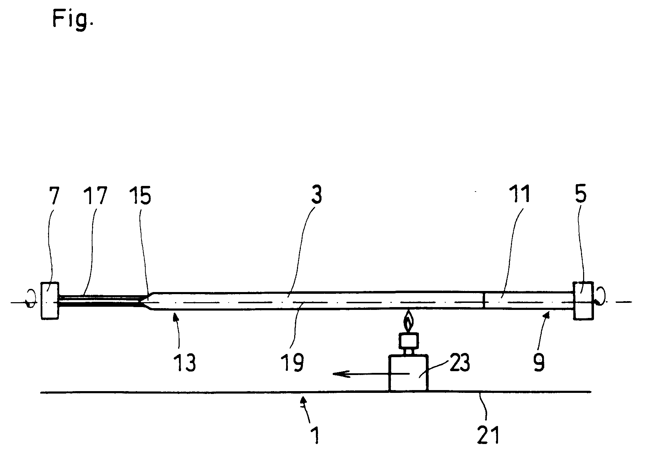

Ein Ausführungsbeispiel der Erfindung ist in der Zeichnung vereinfacht dargestellt und in der nachfolgenden Beschreibung näher erläutert.

Die in der Fig. beispielhaft dargestellte Vorrichtung 1 zum Erhitzen eines langgestreckten Glaskörpers 3 weist an ihrem einen Ende ein um eine Längsachse 19 drehbares erstes Spannfutter 5 und an ihrem gegenüberliegenden anderen Ende ein um die Längsachse 19 drehbares zweites Spannfutter 7 auf.

Der langgestreckte Glaskörper 3 besitzt beispielsweise eine zylindrische Form und hat an seinem ersten Ende 9 einen Einspannabschnitt 11 beispielsweise in Form eines angeschweißten Quarzstabes und an seinem dem ersten Ende 9 abgewandten zweiten Ende 13 eine etwa kegelförmige Spitze 15. Der Glaskörper 3 ist an seinem ersten Ende 9 mit seinem Einspannabschnitt 11 in das erste Spannfutter 5 eingespannt.

An seinem zweiten Ende 13 ist der langgestreckte Glaskörper 3, der beispielsweise als Vorform zum Ziehen zur Informationsübertragung verwendbarer optischer Fasern dient, mit seiner Spitze 15 in ein dickwandiges Quarzrohr 17 eingeführt, so daß der Glaskörper 3 an seinem Ende 13 teilweise in das Quarzrohr 17 ragt. Dabei besteht das dickwandige Quarzrohr 17 beispielsweise aus dem gleichen Werkstoff wie das Außenmaterial des als Vorform zum Faserziehen verwendbaren langgestreckten, z. B. schichtenförmig aufgebauten Glaskörpers 3. Die Berührung zwischen dem Glaskörper 3 und dem Quarzrohr 17 erfolgt dabei in einem Bereich, der nicht zur Faser ausgezogen wird, so daß Faserbrüche als Folge von Kontaminationen in der Oberfläche des Glaskörpers 3 durch eine nicht erfolgte Feuerpolitur vermieden werden.

Das Quarzrohr 17 ist an seinem der Spitze 15 des Glaskörpers 3 abgewandten Ende in das zweite Spannfutter 7 der Vorrichtung 1 eingespannt. Auf diese Weise ist der Glaskörper 3, der beispielsweise durch das antreibbare erste Spannfutter 5 um die Längsachse 19 gedreht wird, fest und sicher sowie konzentrisch zu der Längsachse 19 gehalten.

Auf einer Bank 21 der Vorrichtung 1 ist ein Brenner 23 angeordnet, der zum Erhitzen des langgestreckten Glaskörpers 3 zum Zwecke der Feuerpolitur dient. Der Brenner 23 ist auf der Bank 21 zumindest parallel zu der Längsachse 19, beispielsweise aber auch quer dazu bewegbar. Zur Feuerpolitur des Glaskörpers 3 bewegt sich der Brenner 23 bei sich um die Längsachse 19 drehendem Glaskörper 3 beispielsweise ausgehend von dem Einspannabschnitt 11 bis hin zu der Spitze 15 des Glaskörpers 3, wobei z. B. ein gleichbleibender Abstand zwischen dem Brenner 23 und dem langgstreckten Glaskörper 3 eingehalten wird. Auf diese Weise erhält man einen langgestreckten Glaskörper 3 mit einer kontaminationsfreien und glatten Oberfläche, der sich sehr gut zum Ziehen von Glasfasern hoher Festigkeit eignet.

Beim Einspannen des Glaskörpers 3 in die Vorrichtung 1 wird man beispielsweise so vorgehen, daß man zunächst die Spitze 15 des Glaskörpers 3 in das Quarzrohr 17 einführt und dann den Glaskörper 3 mit dem Quarzrohr 17 an dem Einspannabschnitt 11 in das erste Spannfutter 5 und mit dem Quarzrohr 17 in das zweite Spannfutter 7 einspannt.

## Patentansprüche

1. Vorrichtung zum Feuerpolieren eines langgestreckten Glaskörpers mit einem drehbaren ersten Spannfutter, in das ein erstes Ende des Glaskörpers einspannbar ist, einem verschiebbaren Brenner und einem dem ersten Spannfutter abgewandten drehbaren zweiten Spannfutter, dadurch gekennzeichnet, daß in das zweite Spannfutter (7) ein Quarzrohr (17) eingespannt ist und daß der Glaskörper (3) an seinem dem ersten Ende (9) abgewandten zweiten Ende (13) in das Quarzrohr (17) einführbar und ohne eine Befestigung an dem Quarzrohr (17) durch dieses geführt ist.

2. Vorrichtung nach Anspruch 1, dadurch gekennzeichnet, daß der Glaskörper (3) mit einer an seinem zweiten Ende (13) ausgebildeten Spitze (15) in das Quarzrohr (17) einführbar ist.

3. Vorrichtung nach Anspruch 1 oder 2, dadurch gekennzeichnet, daß das Quarzrohr (17) aus dem gleichen Werkstoff wie der Glaskörper (3) an seiner Oberfläche ausgebildet ist.

4. Verfahren zum Feuerpolieren eines langgestreckten Glaskörpers, bei dem der Glaskörper an einem ersten Ende in ein drehbares erstes Spannfutter eingespannt und an seinem diesem ersten Ende abgewandten zweiten Ende geführt wird, der Glaskörper um seine Längsachse gedreht und mittels eines zumindest parallel zu der Längsachse des Glaskörpers verschiebbaren Brenners erhitzt wird, dadurch gekennzeichnet, daß der Glaskörper (3) an seinem zweiten Ende (13) durch das Einführen des zweiten Endes (13) in ein Quarzrohr (17) und das Einspannen des Quarzrohres (17) in ein dem ersten Spannfutter (5) abgewandtes drehbares zweites Spannfutter (7) ohne eine Befestigung des Glaskörpers (3) an dem Quarzrohr (17) geführt wird.

5. Verfahren nach Anspruch 4, dadurch gekennzeichnet, daß der Glaskörper (3) mit einer an seinem zweiten Ende (13) ausgebildeten Spitze (15) in das Quarzrohr (17) eingeführt wird.

## Claims

1. Apparatus for the fire polishing of a long glass body, having a rotatable first chuck in which a first end of the glass body can be clamped in position, a displaceable torch, and a rotatable second chuck remote from the first chuck, characterized in that a quartz tube (17) is clamped in position in the second chuck (7), and in that the glass body (3) can be inserted at its second end (13) remote from the first end (9) into the quartz tube (17) and is guided by the latter without being fastened to it.

2. Apparatus according to Claim 1, characterized in that the glass body (3) can be inserted into the quartz tube (17) with a point (15) formed on its second end (13).

3. Apparatus according to Claim 1 or 2, characterized in that the quartz tube (17) is formed from the same material as the surface of the glass body (3).

4. Method of fire polishing a long glass body, in which the glass body is clamped in position at its first end in a rotatable first chuck and is guided at its second end remote from this first end, the glass body is rotated about its longitudinal axis and is heated by means of a torch displaceable at least parallel to the longitudinal axis of the glass body, characterized in that the glass body (3) is guided at its second end (13) by inserting the second end (13) into a quartz tube (17) and by clamping the quartz tube (17) in position in a rotatable second chuck (7) remote from the first chuck (5) without fastening the glass body (3) to the quartz tube (17).

5. Method according to Claim 4, characterized in that the glass body (3) is inserted into the quartz tube (17) with a point (15) formed on its second end (13).

## Revendications

1. Dispositif pour le polissage au chalumeau d'un corps longitudinal en verre, comprenant un premier mandrin rotatif de serrage permettant de fixer une première extrémité du corps en verre, un chalumeau déplaçable et un second mandrin rotatif de serrage disposé à l'opposé du premier mandrin, caractérisé e ce que le second mandrin de serrage (7) enserre un tube en quartz (17) et que le corps en verre (3) peut être introduit par sa seconde extrémité (13) opposée à la première extrémité (9) dans le tube en quartz (17) et s'y guide sans fixation sur ce tube en quartz (17).

2. Dispositif selon la revendication 1, caractérisé en ce que le corps en verre (3) peut être introduit dans le tube en quartz (17) par une pointe (15) réalisée à sa seconde extrémité (13).

3. Dispositif selon la revendication 1 ou 2, caractérisé en ce que le tube en quartz (17) est fait du même matériau que la couche superficielle du corps en verre (3).

4. Procédé pour le polissage au chalumeau d'un corps allongé en verre, qui est fixé par sa première extrémité dans un premier mandrin de serrage rotatif et qui est guidé par sa seconde extrémité opposée à la première extrémité, selon lequel le corps en verre est tourné autour de son axe longitudinal et il est chauffé par un chalumeau qui peut être déplacé au moins parallèlement à l'axe longitudinal du corps en verre, caractérisé en ce que le corps en verre (3) est guidé par sa seconde extrémité (13) grâce à l'insertion de cette seconde extrémité (13) dans un tube en quartz (17) et grâce à la fixation de ce tube en quartz (17) dans un second mandrin de serrage (17) qui est disposé à l'opposé du premier mandrin de serrage (5), et cela sans fixation du corps en verre (3) sur le tube en quartz (17).

5. Procédé selon la revendication 4, caractérisé en ce que le corps en verre (3) est introduit dans le tube en quartz (17) par une pointe (15) qui est réalisée à sa seconde extrémité (13).
